# EUROPEAN PATENT SPECIFICATION

(11) **EP 1 424 284 B1**
(45) Date of publication and mention of the grant of the patent: **15.08.2007**
(21) Application number: 03257529.2
(22) Date of filing: 28.11.2003
(51) Int. Cl.: B65B 1/32, B65B 9/20, B65B 5/12, B65B 1/46

(54) **Weighing and flavoring system, and packaging apparatus**
Wäge- und Aromatisierungseinrichtung und Verpackungsmaschine
Dispositif de pesage et aromatisation, et machine pour emballer

(30) Priority: 29.11.2002 JP 2002346854; 08.07.2003 GB 0315972
(43) Date of publication of application: 02.06.2004
(73) Proprietor: ISHIDA CO., Ltd., Kyoto-shi, Kyoto 606-8392 (JP)
(72) Inventor: Sunter, Adrian Meredith, c/o Ishida Europe Ltd., Birmingham B32 3DB (GB); Kitagawa, Kazumi, c/o Ishida Co., Ltd., Ritto-shi Shiga 520-3026 (JP); Yakushigawa, Yasushi, c/o Ishida Co., Ltd., Ritto-shi Shiga 520-3026 (JP); Yoshikawa, Takao, c/o Ishida Co., Ltd., Ritto-shi Shiga 520-3026 (JP)
(74) Representative: Skone James, Robert Edmund

(56) References cited:
- EP-A- 1 050 469
- WO-A-02/41715

## Description

The present invention generally relates to a weighing and flavoring system. More specifically, the present invention relates to an apparatus and method for packaging articles such as a snack food while controlling the quantity of an additive such as a flavoring applied to the articles.

As can be seen from Laid-open Japanese Patent Publication 2002-171913, conventional flavoring systems have been proposed in which weighed articles are covered with flavoring in a quantity in accordance with the weighed value of individual weighed article batches that have been weighed upstream.

This apparatus promotes uniform flavoring, as flavoring is applied in quantities appropriate for the weighed value of individual weighed batches.

However, when there is a problem in the flavoring apparatus, this system cannot detect that there are weighed articles batches to which flavoring has not been added because of the problem with the flavoring apparatus. Accordingly, there is a risk that weighed articles batches to which flavoring has not been added will be shipped as regular products.

On the other hand, as can be seen from Laid-open Japanese Patent Publication 2002-229611, an apparatus has been proposed that compares weight values for individual weighed article batches from an upstream weigher with weight values for the relevant weighed article batches as measured by a downstream check weigher, and based on the difference therebetween, judgment is made as to whether the weighed article batches have been properly flavored or not. In this apparatus, the reference value for the check weigher can be adjusted as required depending on the individual weighed article batches, so that any excess or deficiency in articles can be detected for each individual article batch.

However, this apparatus can judge only if there is an excess or deficiency in the amount of articles in each of the article batches, and is not capable of judging whether flavouring has been added in the appropriate quantity.
WO02/41715 discloses a flavouring system where additive is mixed with a product downstream of a weighing unit.

In view of the above, it will be apparent to those skilled in the art from this disclosure that there exists a need for improved weighing and flavoring system and packaging apparatus that overcome the above-described problems. This invention addresses this need in the art as well as other needs, which will become apparent to those skilled in the art from this disclosure.

It is an object of the present invention to provide a weighing and flavoring system, and a packaging apparatus that are capable of assuring proper flavoring quality.

To achieve this object, the present invention provides a weighing and flavoring system that includes a measurer for measuring articles, a flavoring apparatus disposed downstream of the measurer for supplying a predetermined quantity of flavoring, thus flavoring the articles, a check measurer disposed downstream of the flavoring apparatus for measuring the quantity of the flavored articles; setting means for setting at least one threshold value based on the quantity of the articles as measured by the measurer, and a sorting unit for sorting the flavored articles based on the at least one threshold value according to the quantity of the flavored articles as measured by the check measurer.

In this first aspect of the invention, a checker-measured weight Wd and a reference value ΣW are compared, and an excess or deficiency amount (i.e., the deviation) Δ = Wd - EW is compared with the threshold value SHi. Unless some of the articles fall off during transport, the excess or deficiency amount Δ will vary depending upon the amount of flavoring actually added.

Accordingly, by learning flavoring excess or deficiency amount Δ through the deviation between the checker-measured weight Wd and the pre-flavoring measured weight Wc, proper flavoring is assured. Specifically, the sorting unit can sort articles depending on, for example, with what type of flavoring the articles have been flavored. Moreover, sorting of flavoring quality can be made and flavoring control implemented by simply adding new software to conventional check weighers determination.

Preferably, a low limit value and/or a high limit value be set based on the measured weight Wc of the articles as the threshold value SHi, and that a plurality of such high limit values and/or low limit values be set.

By setting a plurality of high limit values and low limit values, not only can determination of acceptance/rejection of articles be made, but ranking of articles can also be carried out.

In addition, for the threshold value SHi, a different set value may be used for each type of articles. However, by carrying out ranking and acceptance/rejection determination based on the measured weight Wc, which is article weight as actually measured, more accurate ranking and acceptance/rejection determination can be carried out

Preferably, the weight of the flavoring, that is, a value corresponding to the weight of the articles as measured by the weigher, be set as the minimum low limit value. This allows the removal of those products to which flavoring has not been applied, based on the minimum low limit value.

Accordingly, the minimum low limit value is set as a value close to the value of checker-measured weight Wd, while being the weight obtained in cases where no flavoring has been applied at all.

Preferably, the weighing and flavoring system includes control means for controlling the predetermined quantity of the flavoring supplied by the flavoring apparatus based on the quantity of the flavored articles as measured by the check measurer and the quantity of the articles as measured by the measurer.

The present invention provides a weighing and flavoring system that includes a measurer for measuring a quantity of articles, a flavoring apparatus disposed downstream of the measurer for supplying a predetermined quantity of flavoring, thus flavoring the articles, a check measurer disposed downstream of the flavoring apparatus for measuring the quantity of the flavored articles; and control means for controlling the predetermined quantity of the flavoring to be added by the flavoring apparatus based on the checker-measured weight as measured by the checker and the reference value.

In this aspect of the present invention, checker-measured weight Wd and the reference value ΣW are compared, and the excess or deficiency amount (i.e., the deviation) Δ (= Wd - EW) is obtained. Unless some of the articles have fallen off during transport, the excess or deficiency amount Δ will vary depending upon the amount of flavoring actually added. Accordingly, by learning flavoring excess or deficiency amount Δ, proper flavoring is assured. Specifically, feedback-control of excess or deficiency amount Δ assures that the proper amount of flavoring is added. Moreover, determination of flavoring quality and flavoring control can be carried out by simply adding new software to conventional check weighers.

Preferably, the actually added amount Wr, which is the amount of flavoring S actually added to articles, be calculated from checker-weighed weight Wd and article measured weight Wc as measured by the weigher, and that supply of flavoring by the flavoring apparatus be controlled based on weight Ws, which is weight of flavoring supplied by the flavoring apparatus, and the actually added amount Wr. By comparing actually added amount Wr and supplied flavoring weight Ws, control of flavoring addition can be carried out with greater precision.

In the present invention, in cases where a packager for packaging articles is provided between the flavoring apparatus and the check weigher, it is preferable that the reference value ΣW be set with weight Wb of package for packaging the article added thereto.

Measuring the articles weight after it has been accommodated in packaging enables more accurate checking of actual weight of the articles. Further, because adding weight of packaging material enables the setting of a more appropriate reference value ΣW, more accurate weight checking becomes possible.

It is preferable that the flavoring apparatus of this system supply flavoring in the quantity of weight Ws, weight Ws being in accordance with measured weight Wc of the article as measured by the measure.

Because additive quantity can be modified depending on actual article quantity, unintended variations in flavor can be minimized.

The present invention also provides an apparatus for packaging articles, the apparatus being adapted to apply an additive to the articles and comprising a weigher for dispensing a predetermined quantity of the articles; an additive dispenser for supplying a quantity of the additive to the dispensed predetermined quantity of the articles to produce a mixture; and, a packaging machine to which the dispensed predetermined quantity of articles and quantity of additive are supplied, the packaging machine packaging the dispensed quantity of the articles and quantity of additive in a package; a check weigher for monitoring the combined weight of the package and the mixture; and a controller for controlling the additive dispenser in response to an output from the check weigher in order to adjust the quantity of additive supplied such that the combined weight of the package and the mixture meets predetermined requirements.

The present invention further provides a method for packaging articles, the method including steps of dispensing a predetermined quantity of the articles; supplying a quantity of additive to the dispensed quantity of articles to produce a mixture; packaging the dispensed quantity of the articles and the quantity of additive in a package; wherein monitoring the combined weight of the articles and the mixture; and adjusting the quantity of additive supplied such that the combined weight of the package and the mixture meets predetermined requirements.

In this specification, the term "quantity" refers to number, weight, volume or any other measure suitable for the article concerned.

Hence, the invention provides an apparatus and method for packaging articles in which the quantity of additive applied can be adjusted to meet predetermined requirements and prevents variations in the quantity of additive that is dispensed.

Typically, the dispensed quantity of articles and quantity of additive are mixed in a mixer upstream of the packaging machine in order to produce the mixture and, in a preferred embodiment, the mixer comprises an Archimedean screw.

The weigher used may be any type of weigher but typically, it is a combinational weigher for example of the type manufactured by Ishida Co., Ltd.

Preferably, the packaging machine is a vertical form fill seal packaging machine such as an Apex or Atlas machine as manufactured by Ishida Co., Ltd.

Any variety of dispenser may be used with the apparatus but normally, the dispenser includes a bulk hopper and a compressed gas transport. The gas used may be, for example, nitrogen or air.

The apparatus and method may be used with any variety of articles, for example, a foodstuff such as potato chips.

The additives may take a variety of forms including flavorings such as salt or spices, vitamins, flavoring cachet which allows a purchaser to add the flavoring himself as required, or non-food items such as tokens, novelty toys and the like. The additives may be in a variety of forms, including liquid, powder and particulate forms.

It is generally known to an ordinary skill in the art that flavorings typically include seasoning such as salt or spices but may also include other particulate, powder or liquid additives that typically require to be applied reasonably uniformly. Flavorings also include "chemical" flavors commonly defined by "E numbers" such as cheese and onion flavor.

These and other objects, features, aspects and advantages of the present invention will become apparent to those skilled in the art from the following detailed description, which, taken in conjunction with the annexed drawings, discloses a preferred embodiment of the present invention.

Referring now to the attached drawings which form a part of this original disclosure:

Figure 1 is a schematic lateral view of the weighing and flavoring system according to a first embodiment of the present invention;

Figure 2 is a schematic drawing of the functions of the combinational weigher;

Figure 3 is a schematic, partially exploded lateral view showing the combinational weigher, flavoring apparatus and bag-making packager;

Figure 4A-D is a schematic cross-sectional view of a flavoring method;

Figure 5A is a schematic view of the configuration of the present invention; Figure 5B is a representation of what is stored by the storage device;

Figures 6A-G are flowcharts showing the operations of the system;

Figure 7 is a representation of sorting and determination of acceptance/rejection methods; and

Figure 8 is a schematic lateral view of the packaging apparatus.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

An embodiment of the present invention will be explained with reference made to the drawings.

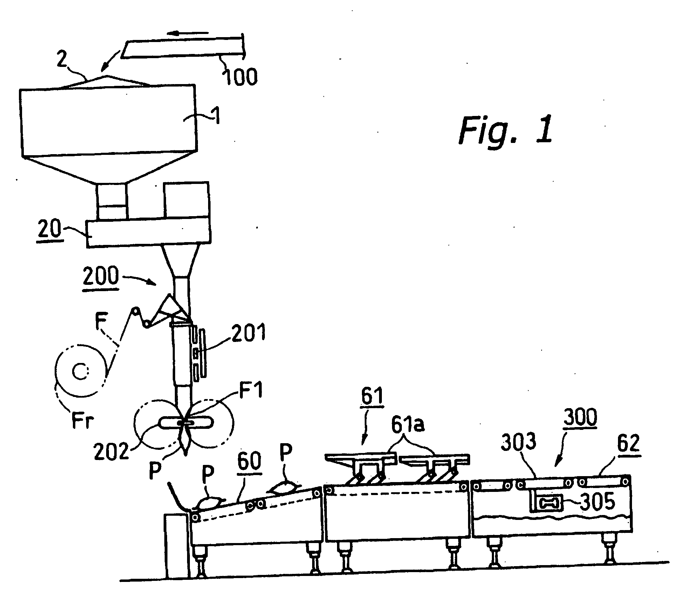

As shown in Figure 1, the flavoring and weighing system includes, from upstream to downstream, a transport conveyer 100, a combinational weigher 1, a flavoring apparatus 20, a bag-forming packager 200, a stand-up conveyer 60, a seal checker 61, a check weigher 300 and a classifier (sorting unit) 62. The transport conveyer 100 drops articles M that have been weighed into a central section of a dispersion feeder 2 of the combinational weigher 1. The articles M, after some amount from a few to many have been gathered together and enclosed in a bag, become products.

### <Combinational Weigher 1>

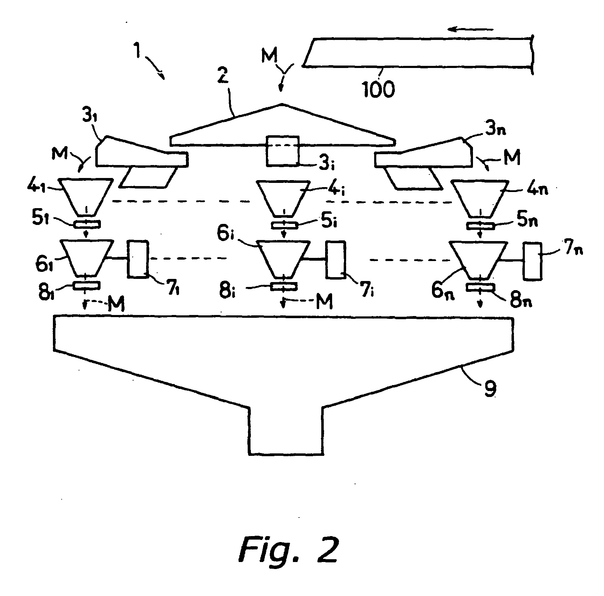

As shown in Figure 2, the dispersion feeder 2 and supply troughs 3i of the combinational weigher 1 vibrate when a vibrator is driven, thereby supplying articles M on the dispersion feeder 2 to a multiplicity of pool hoppers 4i disposed downstream of the supply troughs 3i. These pool hoppers 4i each have a gate 5i provided underneath, and temporarily accommodate articles M supplied from the supply troughs 3i. Weighing hoppers 6i are disposed downstream of the pool hoppers 4i. These weighing hoppers 6i each have a weighing head that includes a weight detector 7i for detecting the weight of articles M deposited by the pool hopper 4i into the weighing hopper 6i, and a gate 8i. A large gathering and discharge chute 9 is disposed below the gates 8i. As described below, by combining articles M in quantities (measured weights) as detected by weight detectors 7i, articles M are combined to have a weight value equal or close to a target value. The articles M are then dropped into the flavoring apparatus 20 shown in Figure 1. The weight detectors are conventional components that are well known in the art. Therefore, these structures will not be discussed or illustrated in detail herein.

<Flavoring Apparatus 20>

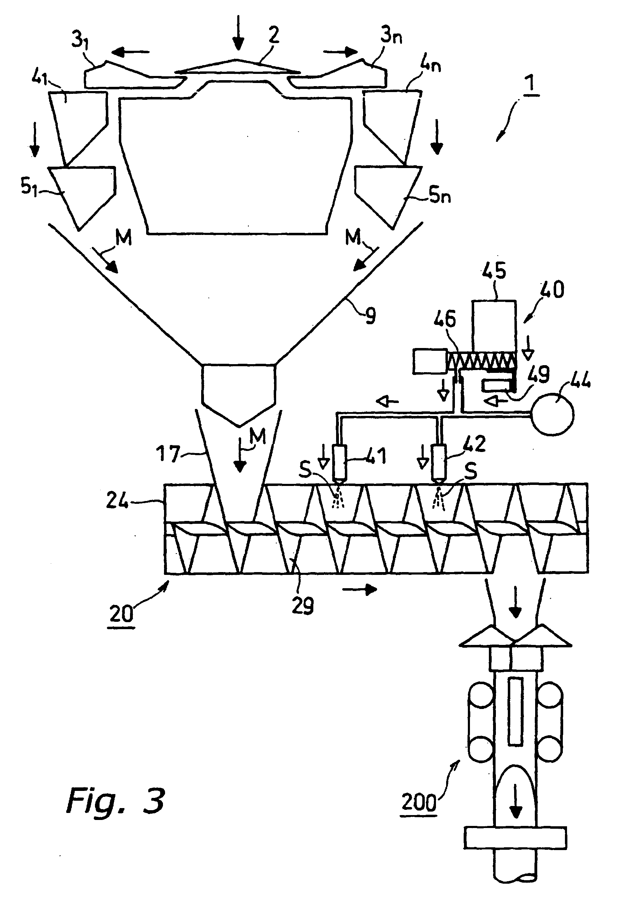

As shown in Figure 3, the flavoring apparatus 20, which flavors articles M by supplying flavoring S thereto, includes a conveyer unit 24 that is a screw conveyer, and a flavoring supply apparatus 40. The flavoring apparatus and flavoring supply apparatus are conventional components that are well known in the art. Therefore, these structures will not be discussed or illustrated in detail herein. Articles M, having been dropped into the conveyer unit 24 from the gathering and discharge chute 9 via a take-in chute 17, are transported in a generally horizontal direction within the conveyer unit 24 by a spiral blade 29.

As shown in Figures 4A-4D, articles M within the conveyer unit 24 accumulate on the bottom portion of the conveyer unit 24, and are transported by the rotating spiral blade 29 after being divided into batches #1 - #6. That is, articles M here are divided into articles Mi, each being a batch of a set quantity as measured by the combinational weigher 1. The articles Mi are transported in such fashion that they do not mix with each other.

The flavoring supply apparatus 40 is disposed above the conveyer unit 24 of Figure 3. The flavoring supply apparatus 40 includes sprays guns 41 and 42 for spraying flavoring S into the conveyer unit 24. The spray guns 41 and 42 are connected to an air compressor 44. A prescribed amount (discussed below) of powdered flavoring S stored in a charge tank 45 is measured out by and taken up by a screw feeder 46, and air pressure from the air compressor 44 causes the flavoring S to be sprayed into the conveyer unit 24 from the spray guns 41, 42.

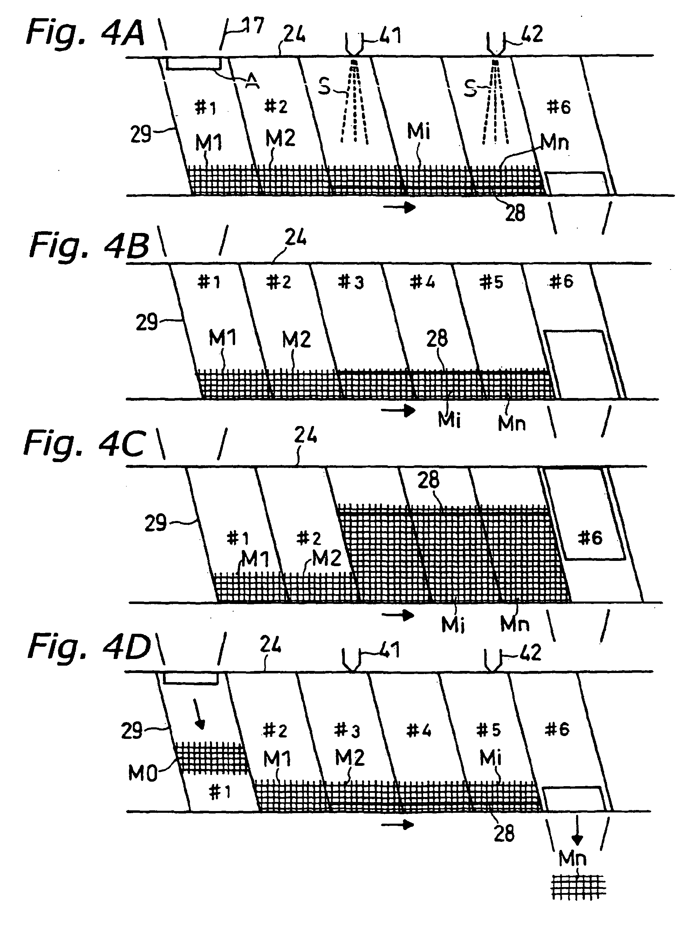

Because, as described above, the articles Mi of Figure 4 are transported separately, having been divided into batches as discussed above, a set quantity of flavoring S is sprayed by the spray guns 41, 42 onto each article Mi thus divided.

The articles M, after flavoring by the flavoring apparatus 20, are transported to the bag-making packager 200.

In this embodiment, a stirring bar 28 is fixedly provided to the spiral blade 29 as shown in Figure 4A-4D, so that the articles M are stirred by rotation of the stirring bar 28 and spiral blade 29 within the conveyer unit 24.

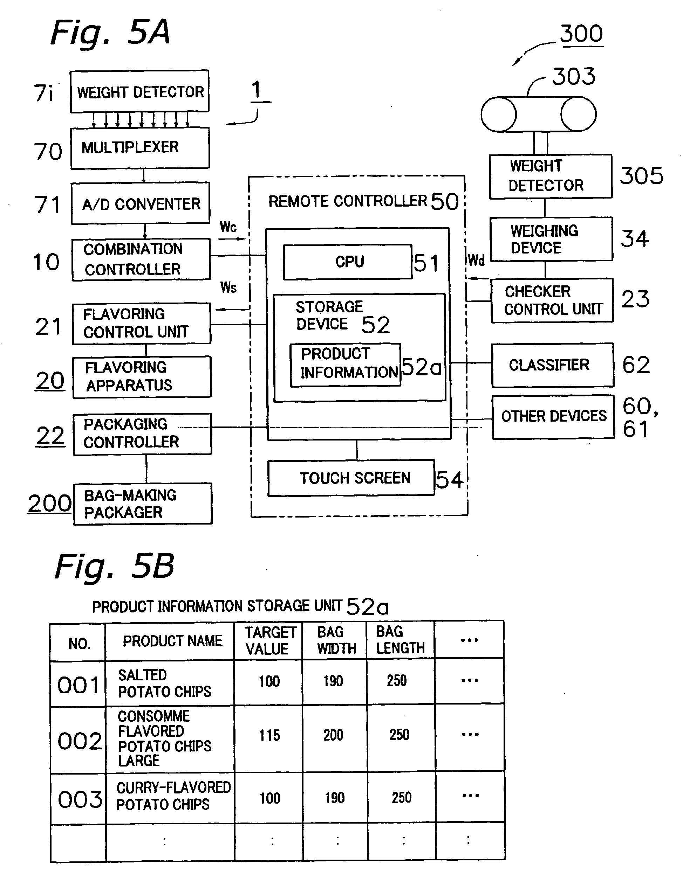

The flavoring supply apparatus 40 of Figure 3 is attached to a weight detector 49, such as a load cell. Before and after the spray guns 41, 42 spray flavoring S on a single batch of articles M (#i) as shown in Figure 4A-4D, a flavoring control unit 21 (Figure 5) of the flavoring supply apparatus 40 receives weight signals from the weight detector 49 and controls the amount of flavoring S supplied to each single batch of article Mi based on the flavoring supply weight Ws.

<Bag-making Packager 200>

The bag-making packager 200 of Figure 1 is a vertical form-fill-seal packager. A sheet of film F drawn from a film reel Fr is formed into a tube after a vertical seal is formed thereupon by a vertical sealer 201. Articles M fall into and fill the tube-shaped film F. With the film F in such a state, film end F1 above the articles M in the film F is sealed and cut transversely by an end sealer 202. In this manner, articles M are consecutively packaged and become packaged products P (as in, for example, Japanese Laid-open Patent Application 4-28105) in this embodiment. The packaged products P fall downward, and are transported by a stand-up conveyer 60 to a seal checker 61.

The seal checker 61 transports the products P downstream as the products P are being held down by restraints 61a, and inspects the quality of the bag seals. After checking of the seals, the products P are transported to the check weigher 300.

The bag-making packagers are conventional components that are well known in the art. Therefore, these structures will not be discussed or illustrated in detail herein.

<Check Weigher 300>

The check weigher 300 includes a weight detector 305 such as a load cell that measures the weight of the products P and a conveyer 303 supported on the top of the weight detector 305. The weight checker 300 measures the weight of each product P as the products P are being transported. After such measurement, the products P are transported from the check weigher 300 to the classifier 62.

<Classifier 62>

As described below, the classifier 62 sorts the products P by classifying them, removing defective products from the system and transporting good products downstream. It also performs any required ranking of the good products.

<Control Configuration>

As shown in Figure 5A, the combinational weigher 1, flavoring apparatus 20, bag-making packager 200 and check weigher 300 respectively include controllers 10 and 22 and control units 21 and 23 for controlling the respective machines. The controllers 10 and 22 and control units 21 and 23 are each operatively connected to a remote controller 50 by an interface (not shown in drawings) in a conventional manner.

The weight detectors 7i of the combinational weigher 1 output detected weight to a multiplexer 70. When a predetermined synchronizing signal is applied, the multiplexer 70 outputs each weight signal to an A/D converter 71. The A/D converter 71 converts each weight signal into a weight value made of digital signals and outputs this weight value to the combination controller 10. Since A/D converter is a well known device, the structure and functions of A/D converter will be clear to an ordinary skill in the art without any further description.

The combination controller 10 calculates a combination weight value for articles M combining one or more of the weight values, compares the combination weight value with a predetermined target value, seeks a combination such that the combination weight value is equal or close to the target value, opens the gated 8i shown in Figure 2 for such combination, combines articles M into the gathering and discharge chute 9 from the weighing hopper 6i, and discharges the articles M into the flavoring apparatus 20.

The combination controller 10 of Figure 5A sends the combination weight value used in the combination to the remote controller 50 as a measured weight (hereinafter, "pre-flavoring measured value") Wc.

The flavoring control unit 21 is operatively connected to the flavoring apparatus 20 in a conventional manner. Upon receiving from the remote controller 50 flavoring S supplied weight (weight of flavoring) Ws (described below) for each batch of article Mi, the flavoring control unit 21 adds from the flavoring supply device 40 flavoring S in the quantity of the supply weight Ws to each article batch Mi within the conveyer unit 24.

The packaging controller 22 is operatively connected to the bag-making packager 200 in a conventional manner. The packaging controller 22, upon receiving such values as length and width of bags from the remote controller 50, forms bags based on such bag information, and fills the bags with articles M to which flavoring S has been added.

Weighing device 34 is connected to the checker control unit 23. When products P are transported on the conveyer 303, weighing device 34 converts output from the weight detector 305 into weight signals, and outputs the same to the checker control unit 23. The checker control unit 23 calculates checker-measured weight Wd based on the weight signals, and sends the same to the remote controller 50. Weighing device 34 can be any conventional device that can measure the weight of products P. It will be clear to an ordinary skill in the art from this disclosure what type of weighing device can be employed as the weighing device 34.

The remote controller 50, as described below, performs quality determination and ranking of products P based on signals from the respective machines, and also performs feedback control of the flavoring apparatus 20. The remote controller 50 is operatively connected to the combination controller 10, flavoring control unit 21, the packaging controller 22, the checker control unit 23, the classifier 62 and other devices in conventional manners. With regard to the classifier 62 to which the remote controller 50 is operatively connected, the remote controller 50 outputs, in accordance with the quality determination and ranking, sorting signals to the classifier 62. The classifier 62 sorts the products P into ranks based on the sorting signals, or else removes unfit products P from the system.

In addition to the controllers 10 and 22 and the control units 21 and 23, machines such as the stand-up conveyer 60 and the seal checker 61 are operatively connected to the remote controller 50 in conventional manners as shown in Figure 5A. Since it will be clear to an ordinary skill in the art, how the remote controller 50 controls such other machines, further description will be omitted from the explanation below.

<Remote controller 50>

A touch screen 54 for making various displays and allowing a variety of input by touching the screen is operatively connected to the remote controller 50 in a conventional manner.

The remote controller 50 includes a CPU 51 and a storage device 52. The remote controller 50 can also include other conventional components such as an input interface circuit, an output interface circuit, and storage devices such as a ROM (Read Only Memory) device and a RAM (Random Access Memory) device. The CPU 51 is programmed to control the combination controller 10, the classifier 62, and other devices. The storage device 52 includes a product information storage device 52a to store processing results and control programs such as ones for the combination calculation as shown in Figure 5B. The remote controller 50 is operatively coupled to the combination controller 10, the flavoring control unit 21, the packaging controller 22, the checker control unit 23, the classifier 62, and other devices in a conventional manner. The remote controller 50 is capable of selectively controlling any of the components operatively connected thereto in accordance with the control program. As shown in Figure 5B, the product information storage device 52 stores in advance, for each product number, product information such as product name, target value, and bag width and length, and associates such information with the relevant product. It will be apparent to those skilled in the art from this disclosure that the precise structure and algorithms for remote controller 50 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

In addition, values such as supply weight Ws and values to calculate threshold values SHi and SLi (described below) are stored in the storage device 52.

<System Operations>

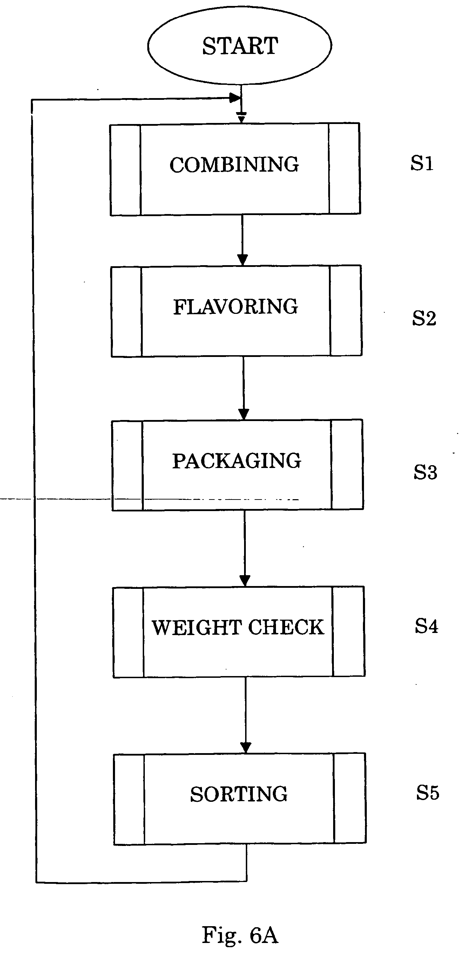

Using the flowcharts of Figure 6A-G, explanation will now be given of the operations of this weighing and flavoring system, centering mainly on the computations by the CPU 51 of the remote controller 50.

First, an operator performs predetermined operations to designate a product using the touch screen 54 of the remote controller 50, and causes the system to start operations.

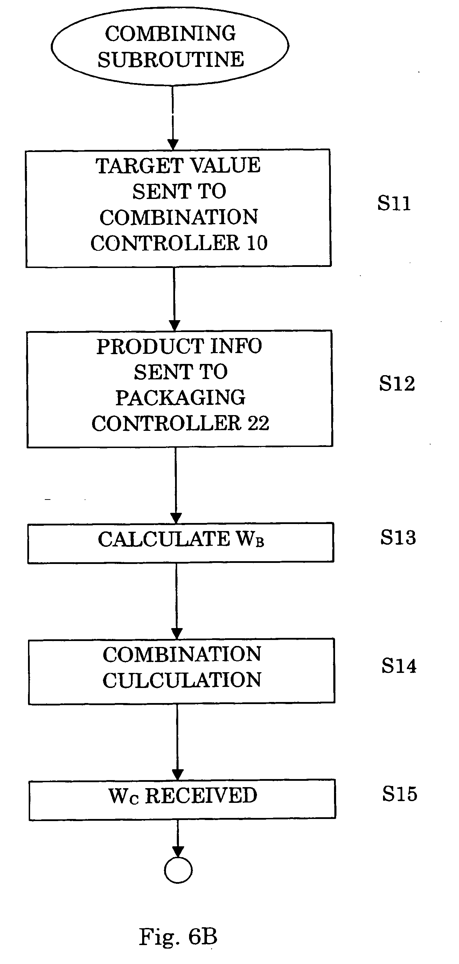

As seen in Figure 6A, the remote controller 50 performs a combining subroutine S1, a flavoring subroutine S2, a packaging subroutine S3, a weight check subroutine S4, and a sorting subroutine S5, in this order. Each of the routines will be explained with reference to Figures 6B-6G.

<Combining Subroutine S1>

In the combining subroutine S1 shown in Figure 6B, the CPU 51 reads the target value for the designated product from the product information storage device, 52a and sends the target value to the combination controller 10 (S11).

Then, the CPU 51 reads from the product information storage device 52 product information 52a such as bag width and length for the product, and sends the product information 52a to the packaging controller 22 (S12). The CPU 51 also calculates weight of bag tare Wb based on such information as bag length (S13). Specifically, bag weight Wb is calculated based on such information as the weight per unit of surface area of film used in the packaging, film width, and length of film taken out.

The combination controller 10 that received the target value combines articles M based on the target value (S14). The combination controller 10 discharges articles M to the flavoring apparatus 20 and sends the combined combination weight value to the remote controller 50 as the pre-flavoring measured value Wc (S15).

Once the remote controller 50 receives the pre-flavoring measured value Wc, the process returns to the main routine.

<Flavoring Subroutine S2>

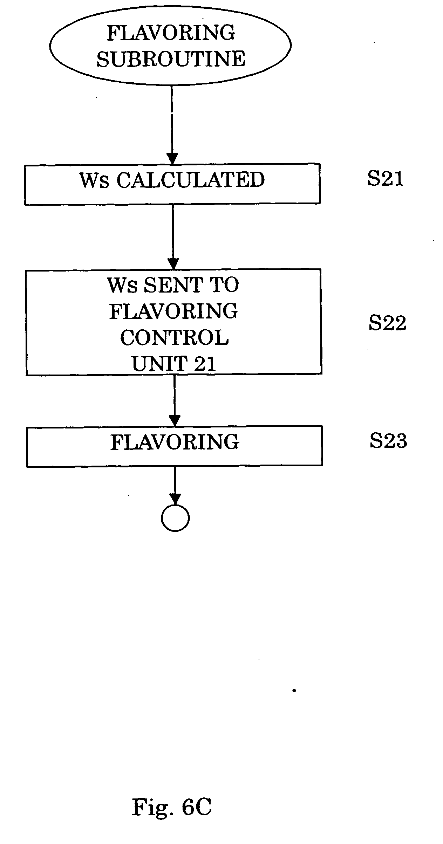

Referring to Figure 6C, in step 21, the CPU 51 calculates flavoring supply weight Ws based on the pre-flavoring measured value Wc. The supply weight Ws is, for example, calculated by multiplying the pre-flavoring measured value Wc by a predetermined value, thereby setting a predetermined proportion with regards to the pre-flavoring measured value Wc. The proportion of pre-flavoring measured value Wc to supply weight Ws may be set as a different value depending on type of product. Then, the process advances to step S22.

In step S22, the remote controller 50 sends the supply weight Ws to the flavoring control unit 21. Based on the received supply weight Ws, the flavoring control unit 21 causes the flavoring apparatus 20 to spray the flavoring S in the quantity defined by the supply weight Ws, thus flavoring the article M (S23). The process then returns to the main routine.

Here, as described earlier, the pre-flavoring measured value Wc is the weight of articles M combined into a single batch. Therefore, the pre-flavoring measured value Wc will be a slightly different value each time the articles M are weighed and discharged. Thus, in order to keep the flavor of the articles M consistent, it is preferable that for each pre-flavoring measured value Wc, the flavoring S be added in a quantity that depends upon the relevant Wc.

As described above, the articles Mi shown in Figure 4A-4D are transported in a state of having been divided into batches by the combinational weigher 1. Therefore, in order to keep the flavor consistent, it is preferable to add flavoring S by the supply weight Ws, which is calculated for each pre-flavoring measured value Wc. Then, the process returns to the main routine.

<Packaging Subroutine S3>

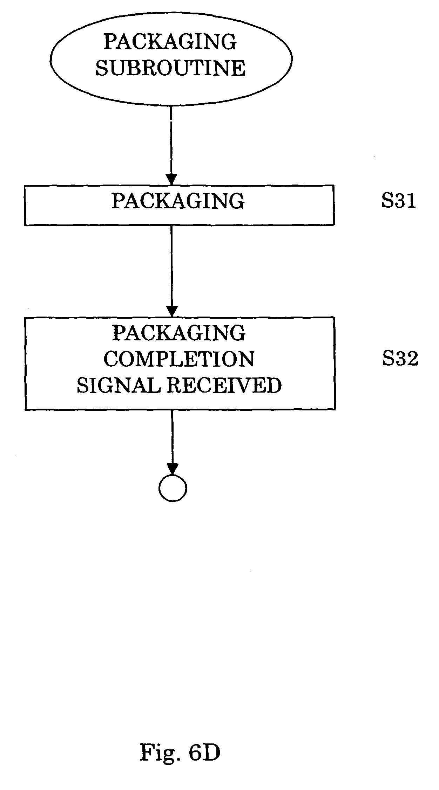

In the packaging subroutine S3 shown in Figure 6D, articles M are packaged by the bag-making packager 200 to become products P, which are then transported downstream (S31).

In step S32, each time packaging by the bag-making packager 200 is completed, the remote controller 50 receives packaging completion signals from the packaging controller 22. Then, the process returns to the main routine.

<Weight Check Subroutine S4>

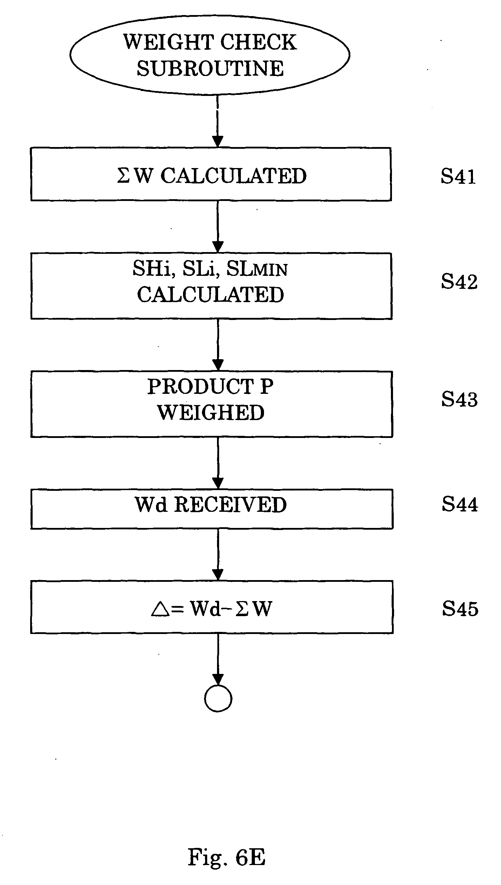

In the weight check subroutine S4 shown in Figure 6E, the weight of each of the flavored articles Mi is compared with the corresponding reference value ∑W.

*Step S41: Calculation of Reference Value* ∑*W*

In step S41, the CPU (setting means) 51 uses the following formula (1) to calculate reference value ΣW for the relevant product P. That is, it calculates and sets a product total weight for each product P.

Formula (1): Reference value ∑W = pre-flavoring measured value Wc + supply weight Ws + bag tare weight Wb.

*Step 42: Calculation of Threshold Value*

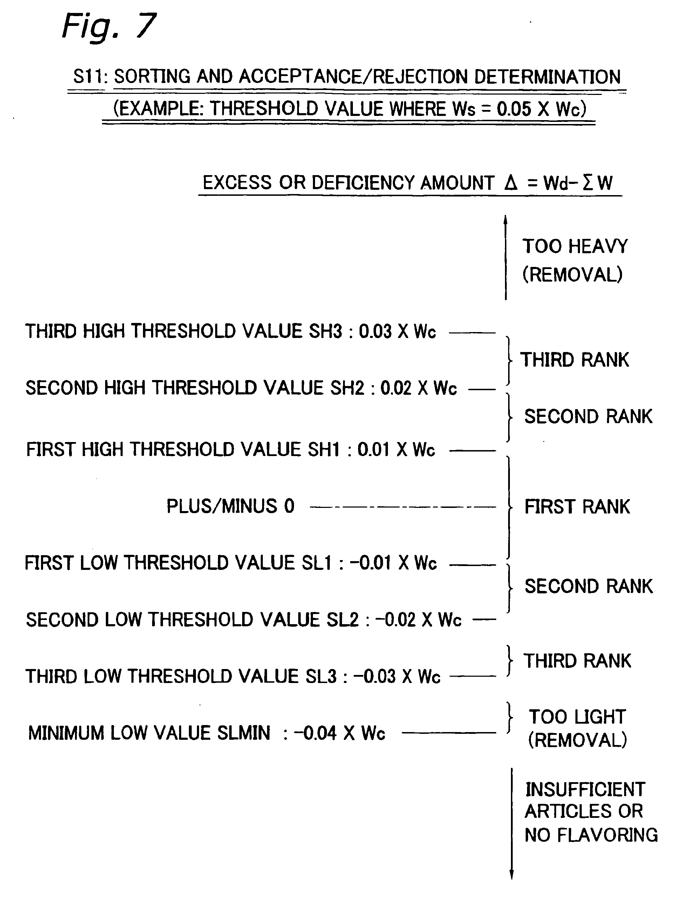

In step S42, the CPU 51 calculates threshold values SHi and SLi for each bag to be filled based on the pre-flavoring measured value Wc; the process then proceeds to step S43. The threshold values SHi and SLi are, as described below, values that are utilized in determining the adequacy of flavoring. As shown in Figure 7, the CPU 51 multiplies the pre-flavoring measured value Wc with a predetermined value to calculate three high threshold values SH1 through SH3 and three low threshold values SL1 through SL3 and minimum low threshold value SL_{MIN}. The high threshold values are set so as to increase from the first high threshold value SH1 to the third high threshold value SH3. The low threshold values are set so as to decrease from the first low threshold value SL1 to the third low threshold value SL3 and the minimum low threshold number SL_{MIN}. For example, in this embodiment, as one example of supply weight Ws as shown in Figure 7, supply weight Ws of the flavoring S is set to be 5% of pre-flavoring measured value Wc (Ws = Wc x 0.05), and the values with which to multiply the pre-flavoring measured value Wc in order to calculate a threshold value is set in increments of 1%. In other words, the first high threshold value SH1 is set to be 1%, the second high threshold value SH2 is 2%, and the third high threshold value SH3 is 3% of the pre-flavoring measured value Wc, while the first low threshold value SL1 is minus 1%, the second low threshold value SL2 is minus 2%, and the third low threshold value is minus 3% of the pre-flavoring measured value Wc.

The minimum low threshold value SL_{MIN} is used, as described below, as a threshold value for products to which the flavoring S has not been added or for which contents have fallen off during transport. It is preferable that the minimum low threshold value SL_{MIN} be set as the negative of the supply weight Ws or a value close to the supply weight Ws. For example, in this embodiment, the negative number is set to be -0.04, which is the negative of 0.04 and is close to the value of 0.05 used for calculating pre-flavoring measured value Wc.

Then, the products P, having been packaged by the bag-making packager 200, pass through the stand-up conveyer 60 and seal checker 61 shown in Figure 1, and are supplied to the check weigher 300. The check weigher 300 weighs the products (S43).

The checker control unit 23 shown in Figure 5A calculates checker-measured weight Wd based on weight signals from weighing device 34, and sends the checker-measured weight Wd to the remote controller 50 (S44).

In step S45, the CPU 51 of the remote controller 50 calculates excess or deficiency amount Δ for each product P based on the following formula (2).

Formula (2): Excess or deficiency amount Δ = checker-measured value Wd - reference value ∑W.

In other words, the excess or deficiency amount Δ is the difference between the -measured weight Wd and the Reference value ΣW. As seen in the above-mentioned Formula 1, the Reference value ΣW is a sum of the pre-flavoring measured value Wc, the supply weight Ws, and the bag tare weight Wb. Here, the pre-flavoring measured value Wc is the value actually measured by the weight detectors 7i of the combinational weigher 1. In addition, because there will rarely be errors in the amount of film sent out by the bag-making packager 200, the bag tare weight Wb will generally be an accurate value. Meanwhile, the flavoring S sprayed into the conveyer 24 will not all adhere to the surface of the articles. Rather, some will adhere to the surface of the articles and the rest will accumulate on the bottom of the screw conveyer. Thus, the supply weight Ws and the amount Wr, which is the weight of the flavoring S actually added to the articles, will differ.

Therefore, the excess or deficiency amount Δ obtained by subtracting reference value ΣW from the checker-measured weight Wd actually measured by the checker weigher 300 is mainly the difference between the weight of flavoring S actually added Wr and the supply weight Ws of flavoring S to be sprayed, that is, the weight of flavoring S that should have been added.

After the calculation in step S45, supply control is carried out for flavoring S by the flavoring apparatus 20 based on excess or deficiency amount Δ. Then, the process returns to the main routine.

<Sorting Subroutine S5>

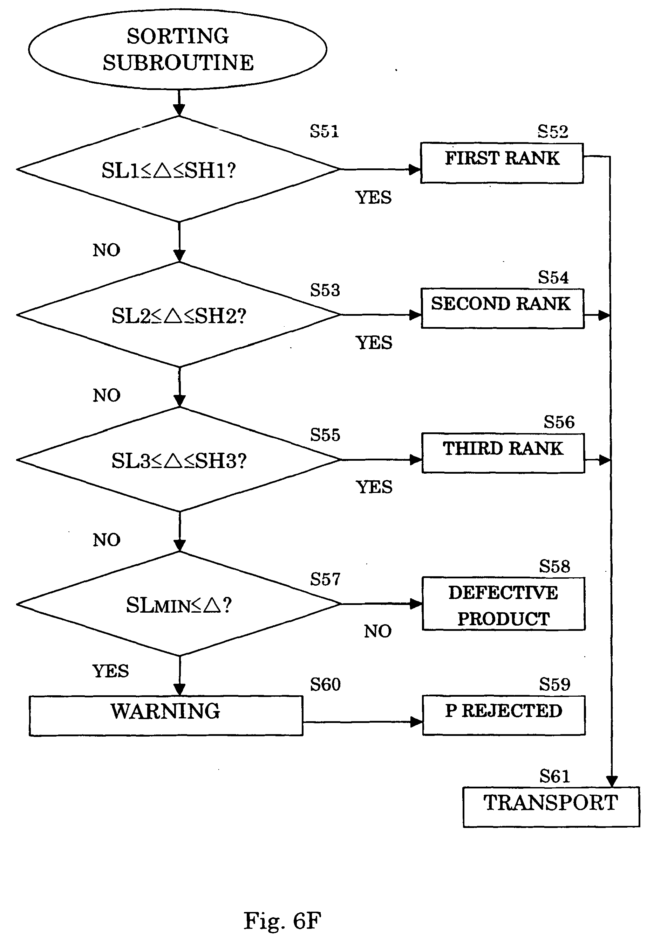

In the sorting subroutine S5 shown in Figure 6F, the CPU (sorting unit) 51 performs the following sorting of products P by comparing the excess or deficiency amount Δ against the threshold values SHi and SLi.

*Steps S51-52: First Rank*

In step S51, the excess or deficiency amount Δ is compared with the first low threshold value SL1 and the first high threshold value SH1. If the excess or deficiency amount Δ is equal to or greater than the first low threshold value SL1 and equal to or less than first high threshold value SH1, the relevant product P is classified as a first rank product that has been flavored in the most appropriate manner (S52). If the product P is not a first rank product, the process proceeds to step S53.

*Steps S53-54: Second Rank*

In step S53, the excess or deficiency amount Δ is compared with the second low threshold value SL2 and the second high threshold value SH2. If the excess or deficiency amount Δ is smaller than the first low threshold value SL1 but equal to or greater than the second low threshold value SL2, or if the excess or deficiency amount Δ is greater than the first high threshold value SH1 but equal to or less than the second high threshold value SH2, the relevant product P is classified as a second rank product that has been flavored in the second most appropriate manner following the first rank (S54). If the product P is not a first rank or second rank product, the process proceeds to step S55.

*Steps S55-56: Third Rank*

In step S55, the excess or deficiency amount Δ is compared with the third low threshold value SL3 and the third high threshold value SH3. Similarly, in cases where the excess or deficiency amount Δ is smaller than second low threshold value SL2 but equal to or greater than the third low threshold value SL3, or in cases where the excess or deficiency amount Δ is greater than the second high threshold value SH2 but equal to or less than the third high threshold value SH3, the product P is classified as a third rank product that has been flavored in the third most appropriate manner following the first rank (S56).

If the product P is not a first rank, second rank, or third rank product, the process proceeds to step S57, where the products P are transported downstream.

*Step S57-58: Removal from Line*

In step S 57, the excess or deficiency amount Δ is compared with the minimum low value SL_{MIN}. In cases where the excess or deficiency amount Δ is smaller than the third low threshold value SL3 and equal to or greater than the minimum low value SL_{MIN}, or in cases where the excess or deficiency amount Δ is greater than the third high threshold value SH3, the product P is determined to be insufficiently or overly flavored, and therefore is determined to be a defective product (S58). Then, the process proceeds to step S59.

In step S59, the remote controller 50 outputs classifying signals to the classifier 62. When a product P thus judged to be defective is transported to the classifier 62, that product P is rejected from the system.

Further, in cases where the excess or deficiency amount Δ is smaller than the minimum low value SL_{MIN} in step S57, the CPU 51 determines that no flavoring has been added to the product P. Thus, the CPU 51 causes, for example, the touch screen 54 to display a warning to the effect that the flavoring apparatus 20 requires inspection (S60), and causes the sorting apparatus 62 to reject the product P from the system.

In this embodiment, first, second, and third rank products P are all transported in step S 61. Depending upon the type of product P, however, second and third rank products P may also be expelled from the system. In addition, second and third rank products P may each be sorted into channels different from the channel for first rank products P, and packed into boxes according to flavoring rank.

<Feedback Supply Control S6>

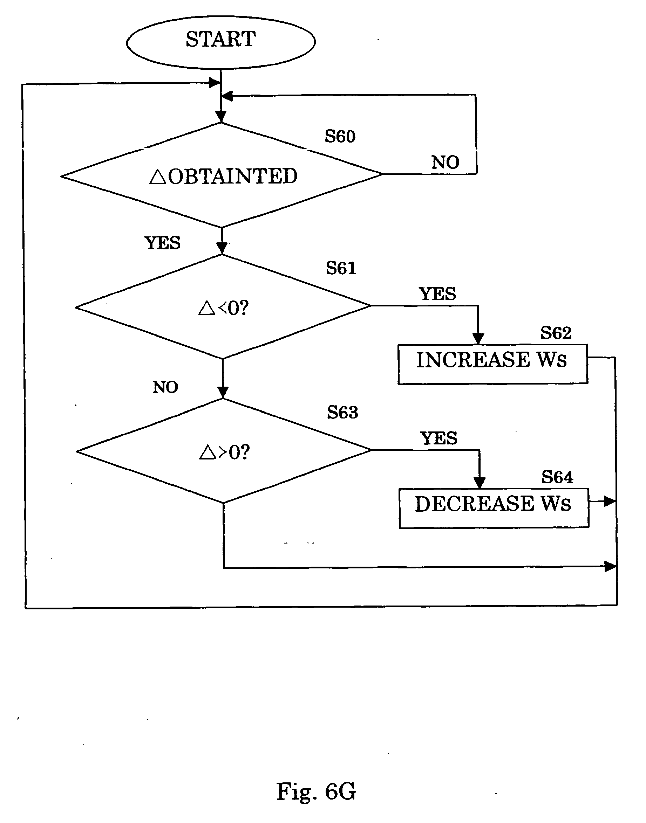

Meanwhile, the feedback supply control shown in Figure 6G is performed concurrently with the sorting subroutine S5, after the excess or deficiency amount Δ is obtained in step S45. In the feedback supply control S6, che supply amount of flavouring 3 is adjusted based on the excess or deficiency amount Δ.

For example, in this embodiment, the system may be configured so that feedback supply control is carried out based on the excess or deficiency amount Δ. In cases where the excess or deficiency amount Δ is a negative value, that is, when the actually added amount Wr indicating the amount of flavoring S actually added is smaller than supply weight Ws (S61), the supply weight Ws is increased in accordance with the excess or deficiency amount Δ (S62). In cases where the excess or deficiency amount Δ is a positive value, that is, when the actually added amount Wr indicating the amount of flavoring S actually added is greater than the supply weight Ws, (S63) then the supply weight Ws is reduced in accordance with the excess or deficiency amount Δ (S64).

The actually added amount Wr is found using the following formula (3).

Formula (3): Actually added amount Wr = checker-measured weight Wd - (pre-flavoring measured value Wc + bag tare weight Wb).

MODIFICATIONS

The supply weight Ws does not necessarily have to be obtained based on each individual pre-flavoring measured value Wc. The supply weight Ws may, for example, be set for each product P as a fixed weight regardless of the pre-flavoring measured value Wc. In addition, the bag tare weight Wb does not have to be calculated for each type of product, but instead, for example, a value calculated or measured in advance may be stored in the storage device 52. Alternatively, the figure representing the weight of actual flavoring S applied can be a value found by multiplying the pre-flavoring measured value Wc with a predetermined value (i.e., a constant determined for each article), instead of the actually added amount Wr. In this case, if the bag tare weight Wb is constant, any changes in the value of the reference value ΣW will be linear, in accordance with changes in the pre-flavoring measured value Wc.

Alternatively, the actual length of bag tare may be monitored and used as the bag tare weight. In this case, changes in the bag tare weight Wb are reflected in calculations.

In the above-described embodiment, sorting is achieved by calculating the excess or deficiency amount (actual deviation) Δ, and setting high limit values and low limit values for the excess or deficiency amount Δ as threshold values and comparing these threshold values with the excess or deficiency amount Δ. However, the system may be configured so that sorting is achieved by setting high and low limit values for the reference value ΣW (aggregate weight), and comparing these higher and lower limits with the checker-weighed weight Wd.

It is also possible to sort the products P based on the supply weight Ws and the actually added amount Wr. For example, it is possible to sort the products P by flavor by multiplying the supply weight Ws by a predetermined number, thereby calculating the high limit threshold value SHi and the low limit threshold value SLi, and comparing these threshold values SHi and SLi with the actually added amount Wr.

In the above-described embodiment, a remote controller 50 is provided in the system. However, in place of providing a remote controller 50, the system may be configured so that the various apparatuses of the system are connected with each other, and one or more of such apparatuses includes setting means and a sorting unit. For example, the checker control unit 23 may be configured to receive signals from the various apparatuses and to perform feedback control of the sorting and of the supply weight Ws.

In such a case, the system may be configured so that an ID tag or magnetic tape on which the reference value ΣW is written is attached to each individual bag of product P, such that the reference value ΣW is read upstream of the checker weigher 300.

Further, identification of bags of products may be carried out by reading a barcode printed or attached thereto.

In addition, the flavoring apparatus 20 does not necessarily have to be a screw conveyer; instead, a tumbler (see Japanese Patent 4-35132) or static electricity dispersion device (Japanese Patent Application Publication 2000-171913) may be used. The disclosures of Japanese Patent 4-35132 and Japanese Patent Application Publication 2000-171913 are incorporated herein by reference.

### SECOND EMBODIMENT

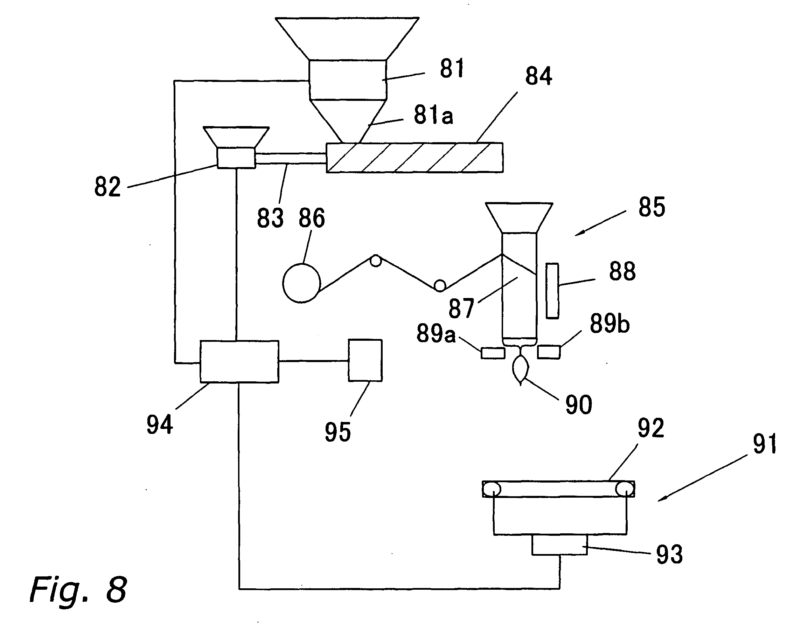

Referring now to Figure 8, a flavoring and weighing system in accordance with a second embodiment will now be explained. In view of the similarity between the first and second embodiments, the descriptions of the parts of the second embodiment that are identical to the parts of the first embodiment may be omitted for the sake of brevity.

Figure 8 is a schematic view of a combinational weigher 81 in accordance with a second embodiment of the present invention, which operates in substantially the same manner as the flavoring and weighing system of the first embodiment previously described. More specifically, the combinational weigher 81 supplies a desired, predetermined quantity W_{c}' of a snack food product such as potato chips, to a mixer 84 via a chute 81a. Since a combination weigher is a well known device in the art, it would be clear to an ordinary skill in the art how a combination weigher is structured and functions without further explanation herein. The combinational weigher 81 also sends the weight of snack food product W_{c}' to the controller 94. The mixer 84 is also supplied with flavoring (an example of additive) from a flavoring dispenser 82 (an example of additive dispenser) via a compressed gas transport 83. The flavoring and weighing system of the second embodiment also includes flavoring supply control, by which the amount of the flavoring to be added is adjusted.

The flavoring dispenser 82 includes a bulk hopper in which the flavoring is stored, an Archimedean screw, and a compressed gas transport 83. The hopper delivers a quantity of the flavoring to the compressed gas transport 83 for delivery to the mixer 84. This way, the flavoring dispenser 82 adds the flavoring by a predetermined quantity W_{FP}.

The mixer 84 includes an Archimedean screw, the rotation of which causes the snack food product and flavoring to mix thoroughly as they traverse along its length. An Archimedean screw is a well known component in the art. Therefore, its structure and function will be clear to an ordinary skill in the art without further explanation. The mixture of the snack food product and flavoring emerge from the far end of the mixer 84 and fall into the loading chute of a vertical form-fill seal packaging machine 85.

This type of packaging machine is well known to those ordinarily skilled in the art. Hence, only a brief description is given here. Film from a reel 86 is drawn over a former 87 into the machine and a continuous longitudinal seal is formed between the edges of the film using a longitudinal sealer 88. The mixture of snack food product and flavoring falls down the loading chute into a bag formed from the film. The bags are formed using transverse sealers 89a, 89b which come together to form a seal for the top of one bag and the bottom of the next bag, against which the mixture comes to rest. The transverse sealers 89a, 89b also have a cutter which separates each bag from the subsequent bag.

A bag 90 shown in Figure 8 contains a predetermined quantity of the snack food product and a quantity of the flavoring that have been mixed together by mixer 84. This bag 90 then drops onto a check weigher 91.

The check weigher 91 includes a conveyor belt 92 that is supported on a load cell 93. As the bag 90 proceeds along the conveyor belt 92, the load cell 93 monitors the weight of the bag 90 with its contents therein. The weight of the bag W_{B} is sent to the controller 94. The bag 90 on leaving conveyor 92 proceeds along a production line (not shown) in a conventional fashion. The resolution of the check weigher 91 is typically in the region of 0.05g to 0.1g.

An output signal from the load cell 93, in other words the weight of the bag W_{B}, is supplied to a controller 94, which issues its own output signal to the flavoring dispenser 82 in response to the signal from the load cell 93. The output signal W_{B} from controller 94 is used to adjust the quantity of the flavoring supplied such that the combined weight of the bag 90 and its contents meet predetermined requirements.

The controller 94 has a memory that stores the weight of the film W_{F} used to make bag 90, which is input by a user prior to operation of the apparatus. It also receives the weight of snack food products W_{c}' supplied to the mixer 84 from combinational weigher 81. Using these two weights and the weight of the bag and its contents W_{B} monitored by load cell 93, it is possible for controller 94 to determine the quantity of flavoring W_{FA} that was actually supplied by the flavoring dispenser 82 by the following formula (4):

Formula (4) : Actually added flavoring W_{FA} = weight of bag W_{B} - weight of snack food products W_{c}'.

The difference between the predetermined quantity of flavoring to be added W_{FP} and the actual quantity of flavoring added W_{FA} is the difference to be adjusted. If the differences in the quantity of flavoring added are small, the controller 94 may adjust the predetermined quantity of flavoring W_{FP} to be supplied by the flavoring dispenser 82 to compensate for this difference. Alternatively, if the difference is large, then controller 94 may indicate to an operator using display 95 that the flavoring dispenser 82 requires cleaning or refilling. In this event, controller 94 may be adapted to stop the production line and prevent further production of product with an incorrect amount of flavoring.

For example, the weight of film used to form a bag is typically in the region of 2g to 4g depending on the size of the bag to be formed, and the weight of the mixture of snack food product and flavoring is typically around 30g. The weight of flavoring supplied depends on the product and the flavoring, but is normally in the region of 2% to 15% of the total weight of the mixture and, in this example, the weight of flavoring desired is 3g. Therefore, with a bag weight of 3g and a weight of snack food product supplied (as indicated by the combinational weigher 81 to the controller 94) of 27.5g, it can be seen that if the check weigher 91 indicates that the total weight of the bag and contents is 32.5g then only 2g of flavoring has been supplied rather than the desired 3g. Therefore, the controller 94 will cause the flavoring dispenser 82 to increase the amount of flavoring supplied to the mixer 84 for mixing each bag of snack food product in order to overcome this error.

As used herein, the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention.

The term "configured" as used herein to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

## Claims

1. A weighing and flavoring system for producing bags containing flavored articles, said weighing and flavoring system comprising:
a measurer (1) for measuring a quantity of articles;and
a flavoring apparatus (20) disposed downstream of said measurer (1), for supplying a predetermined quantity of flavoring, thus flavoring the articles;
**characterised in that** the system further comprises:
a check measurer (300), disposed downstream of said flavoring apparatus (20), for measuring a quantity of the flavored articles;
setting means (50) for setting at least one threshold value based on the quantity of the articles as measured by said measurer; and
a sorting unit (62) for sorting the flavored articles based on said at least one threshold value according to the quantity of the flavored articles as measured by said check measurer (300).

2. The weighing and flavoring system according to claim 1, wherein:
said at least one threshold value includes a plurality of low limit values and a plurality of high limit values.

3. The weighing and flavoring system according to claim 1 or claim 2, wherein:
said at least one threshold value includes a minimum low limit value, which indicates that no flavoring has been added by said flavoring apparatus.

4. The weighing and flavoring system according to any of the preceding claims, further comprising
control means for controlling the predetermined quantity of the flavoring supplied by said flavoring apparatus based on the quantity of the flavored articles as measured by said check measurer and the quantity of the articles as measured by said measurer.

5. The weighing and flavoring system according to claim 4, wherein:
a quantity of the flavoring actually added to the articles by said flavoring apparatus is calculated from the quantity of the flavored articles as measured by said checker measurer and the quantity of articles as measured by said measurer, and
said control means controls the predetermined quantity of the flavoring supplied by said flavoring apparatus based on the quantity of the flavoring actually added to the articles.

6. The weighing and flavoring system according to any of the preceding claims, further comprising:
a packager for packaging the flavored articles into a package, said packager being disposed between said flavoring apparatus and said check measurer,
said check measurer measures the quantity of the flavored articles taking into account a quantity of the package in which said packager packages the flavored articles.

7. The weighing and flavoring system according to any of the preceding claims, wherein:
the predetermined quantity of flavoring supplied by said flavoring apparatus is determined based on the quantity of the articles as measured by said measurer.

8. The weighing and flavoring system according to any of claims 1 to 6, wherein:
the predetermined quantity of flavoring supplied by said flavoring apparatus is determined based on a type of the flavoring to be supplied.

9. A weighing and flavoring system for producing bags containing flavored articles, said weighing and flavoring system comprising:
a measurer (1) for measuring a quantity of articles, and
a flavouring apparatus (20), disposed downstream of said measurer (1), for supplying a predetermined quantity of flavoring, thus flavoring the articles;
**characterised in that** the system further comprises:
a check measurer (300), disposed downstream of said flavoring apparatus (20), for measuring a quantity of the flavored articles; and
control means (50) for controlling the predetermined quantity of the flavoring supplied by said flavoring apparatus (20) based on the quantity of the flavored articles as measured by said check measurer (300) and the quantity of the articles as measured by said measurer (1).

10. The weighing and flavoring system according to claim 9, wherein:
a quantity of the flavoring actually added to the articles by said flavoring apparatus is calculated from the quantity of the flavored articles as measured by said checker-measured weight and the quantity of articles as measured by said measurer, and
said control means controls the predetermined quantity of the flavoring supplied by said flavoring apparatus based on the quantity of the flavoring actually added to the articles.

11. The weighing and flavoring system according to claim 9 or claim 10, further comprising:
a packager for packaging the flavored articles into a package, said packager being disposed between said flavoring apparatus and said check measurer,
said check measurer measurers the quantity of the flavored articles taking into account a quantity of the package in which said packager packages the flavored articles.

12. The weighing and flavoring system according to any of claims 9 to 11, wherein:
the predetermined quantity of flavoring supplied by said flavoring apparatus is determined based on the quantity of the articles as measured by said measurer.

13. The weighing and flavoring system according to any of claims 9 to 11, wherein:
the predetermined quantity of flavoring supplied by said flavoring apparatus is determined based on a type of the flavoring to be supplied.

14. An apparatus for packaging articles, said apparatus being adapted to apply an additive to the articles and comprising
a weigher (1) for dispensing a predetermined quantity of the articles;
an additive dispenser (20) for supplying a quantity of the additive to the dispensed predetermined quantity of the articles to produce a mixture;and
a packaging machine (200) to which the dispensed quantities of articles and additive are supplied, said packaging machine (200) packaging the dispensed quantities of the articles and additive in a package;
**characterised in that** the apparatus further comprises
a check weigher (300) for monitoring a combined weight of the package and the mixture; and
a controller(50) for controlling said additive dispenser (20) in response to an output from said check weigher (300) and from said weigher (1) in order to adjust the quantity of additive supplied by said additive dispenser (20), such that the combined weight of the package and the mixture meets a predetermined requirement.

15. The apparatus according to claim 14, further comprising
a mixer disposed upstream of said packaging machine for producing the mixture by mixing in the dispensed quantities of articles and additive.

16. The apparatus according to claim 15, wherein
said mixer includes an Archimedean screw.

17. The apparatus according to any of claims 14 to 16, wherein
said weigher is a combinational weigher.

18. The apparatus according to any of claims 14 to 17, wherein
said packaging machine is a vertical form fill seal packaging machine.

19. The apparatus according to any of claims 14 to 18, wherein
said dispenser includes a bulk hopper and a compressed gas transport.

20. A method for packaging articles, comprising steps of:
dispensing a predetermined quantity of the articles;
supplying a quantity of additive to the dispensed predetermined quantity of the articles to produce a mixture; and
packaging the dispensed quantities of the articles and the additive in a package;
**characterised by** monitoring the combined weight of the package and the mixture; and
adjusting the quantity of additive supplied in response to the measure of said the quantity of articles and to said monitoring of the combined weight of the package and the mixture, such that the combined weight of the package and the mixture meets predetermined requirements.

21. The method according to claim 20, wherein
the mixture is produced by mixing the dispensed predetermined quantity of the articles with the quantity of the additive prior to said packaging.

22. The method according to claim 20 or claim 21, wherein the articles are dispensed by a combinational weigher.

23. The method according to claims 20 to 22, wherein
the dispensed predetermined quantity of the articles and the quantity of additive are packaged using a vertical form fill seal packaging machine.

24. The method according to any of claims 20 to 23, wherein
the articles are a foodstuff.

25. The method according to claim 24, wherein
the foodstuff are potato chips.

26. The method according to any of claims 20 to 25, wherein
the additive is a flavoring.

## Patentansprüche

1. Wiege- und Aromatisiersystem zum Erzeugen von Beuteln, die aromatisierte Gegenstände enthalten, wobei das Wiege- und Aromatisiersystem Folgendes aufweist:
eine Messvorrichtung (1) zum Messen einer Menge der der Gegenstände; und
ein Aromatisiergerät (20), das stromabwärts von der Messvorrichtung (1) angeordnet ist, um eine vorbestimmte Menge eines Aromas zuzuführen, wodurch die Gegenstände aromatisiert werden;
**dadurch gekennzeichnet, dass** das System des Weiteren folgendes aufweist:
eine Prüfmessvorrichtung (300), die stromabwärts von dem Aromatisiergerät (20) angeordnet ist, um eine Menge der aromatisierten Gegenstände zu messen;
eine Festlegungseinrichtung (50), um zumindest einen Schwellwert auf der Grundlage der Menge der Gegenstände festzulegen, die durch die Messvorrichtung gemessen wird; und
eine Sortiereinheit (62) zum Sortieren der aromatisierten Gegenstände zumindest auf der Grundlage des einen Schwellwertes gemäß der Menge der aromatisierten Gegenstände, die durch die Prüfmessvorrichtung (300) gemessen wird.

2. Wiege- und Aromatisiersystem gemäß Anspruch 1, wobei:
der zumindest eine Schwellwert eine Vielzahl untere Grenzwerte und eine Vielzahl obere Grenzwerte aufweist.

3. Wiege- und Aromatisiersystem gemäß Anspruch 1 oder 2, wobei:
der zumindest eine Schwellwert einen minimalen unteren Grenzwert beinhaltet, der angibt, dass durch das Aromatisiergerät kein Aroma hinzugefügt wurde.

4. Wiege- und Aromatisiersystem gemäß einem der vorherigen Ansprüche, des Weiteren mit:
einer Steuereinrichtung zum Steuern der vorbestimmten Menge des Aromas, das durch das Aromatisiergerät zugeführt wird, und zwar auf der Grundlage der Menge der aromatisierten Gegenstände, die durch die Prüfmessvorrichtung gemessen wird, und auf der Grundlage der Menge der Gegenstände, die durch die Messvorrichtung gemessen wird.

5. Wiege- und Aromatisiersystem gemäß Anspruch 4, wobei:
eine Menge des Aromas, das tatsächlich den Gegenständen durch das Aromatisiergerät hinzugefügt wird, aus der Menge der aromatisierten Gegenstände, die durch die Prüfmessvorrichtung gemessen wird, und aus der Menge der Gegenstände berechnet wird, die durch die Messvorrichtung gemessen wird, und
die Steuereinrichtung die vorbestimmte Menge des Aromas, das durch das Aromatisiergerät zugeführt wird, auf der Grundlage der Menge des Aromas steuert, die den Gegenständen tatsächlich hinzugefügt wird.

6. Wiege- und Aromatisiersystem gemäß einem der vorherigen Ansprüche, des Weiteren mit:
einer Verpackungsvorrichtung zum Verpacken der aromatisierten Gegenstände in eine Verpackung, wobei die Verpackungsvorrichtung zwischen dem Aromatisiergerät und der Prüfmessvorrichtung angeordnet ist, wobei:
die Prüfmessvorrichtung die Menge der aromatisierten Gegenstände unter Berücksichtigung einer Menge der Verpackung misst, in die die Verpackungsvorrichtung die aromatisierten Gegenstände verpackt.

7. Wiege- und Aromatisiersystem gemäß einem der vorherigen Ansprüche, wobei:
die vorbestimmte Menge des Aromas, das durch das Aromatisiergerät zugeführt wird, auf der Grundlage der Menge der Gegenstände bestimmt wird, die durch die Messvorrichtung gemessen wird.

8. Wiege- und Aromatisiersystem gemäß einem der Ansprüche 1 bis 6, wobei:
die vorbestimmte Menge des Aromas, das durch das Aromatisiergerät zugeführt wird, auf der Grundlage einer Art des zuzuführenden Aromas bestimmt wird.

9. Wiege- und Aromatisiersystem zum Erzeugen von Beuteln, die aromatisierte Gegenstände enthalten, wobei das Wiege- und Aromatisiersystem Folgendes aufweist:
eine Messvorrichtung (1) zum Messen einer Menge der Gegenstände, und
ein Aromatisiergerät (20), das stromabwärts von der Messvorrichtung (1) angeordnet ist, um eine vorbestimmte Menge eines Aromas zuzuführen, wodurch die Gegenstände aromatisiert werden;
**dadurch gekennzeichnet, dass** das System des Weiteren Folgendes aufweist:
eine Prüfmessvorrichtung (300), die stromabwärts von dem Aromatisiergerät (20) angeordnet ist, um eine Menge der aromatisierten Gegenstände zu messen; und
eine Steuereinrichtung (50) zum Steuern der vorbestimmten Menge des Aromas, das durch das Aromatisiergerät (20) zugeführt wird, und zwar auf der Grundlage der Menge der aromatisierten Gegenstände, die durch die Prüfmessvorrichtung (300) gemessen wird, und auf der Grundlage der Menge der Gegenstände, die durch die Messvorrichtung (1) gemessen wird.

10. Wiege- und Aromatisiersystem gemäß Anspruch 9, wobei:
eine Menge des Aromas, das tatsächlich den Gegenständen durch das Aromatisiergerät hinzugefügt wird, aus der Menge der aromatisierten Gegenstände, die durch die Prüfmessvorrichtung gemessen wird, und der Menge der Gegenstände berechnet wird, die durch die Messvorrichtung gemessen wird, und
die Steuereinrichtung die vorbestimmte Menge des Aromas, das durch das Aromatisiergerät zugeführt wird, auf der Grundlage der Menge des Aromas steuert, die tatsächlich den Gegenständen hinzugefügt wird.

11. Wiege- und Aromatisiersystem gemäß Anspruch 9 oder 10, des Weiteren mit:
einer Verpackungsvorrichtung zum Verpacken der aromatisierten Gegenstände in eine Verpackung, wobei die Verpackungsvorrichtung zwischen dem Aromatisiergerät und der Prüfmessvorrichtung angeordnet ist,
wobei die Prüfmessvorrichtung die Menge der aromatisierten Gegenstände unter Berücksichtigung einer Menge der Verpackung misst, in die die Verpackungsvorrichtung die aromatisierten Gegenstände verpackt.

12. Wiege- und Aromatisiersystem gemäß einem der Ansprüche 9 bis 11, wobei:
die vorbestimmte Menge des Aromas, das durch das Aromatisiergerät zugeführt wird, auf der Grundlage der Menge der Gegenstände bestimmt wird, die durch die Messvorrichtung gemessen wird.

13. Wiege- und Aromatisiersystem gemäß einem der Ansprüche 9 bis 11, wobei:
die vorbestimmte Menge des Aromas, das durch das Aromatisiergerät zugeführt wird, auf der Grundlage einer Art des zuzuführenden Aromas bestimmt wird.

14. Gerät zum Verpacken von Gegenständen, wobei das Gerät dazu geeignet ist, den Gegenständen ein Additiv hinzuzufügen, mit:
einer Waage (1) zum Abgeben einer vorbestimmten Menge der Gegenstände;
einer Additivabgabevorrichtung (20) zum Zuführen einer Menge des Additivs zu der abgegebenen vorbestimmten Menge der Gegenstände, um ein Gemisch zu erzeugen; und
einer Verpackungsmaschine (200), der die abgegebenen Mengen der Gegenstände und des Additivs zugeführt werden, wobei die Verpackungsmaschine (200) die abgegebenen Mengen der Gegenstände und des Additivs in eine Verpackung verpackt;
**dadurch gekennzeichnet, dass** das Gerät des Weiteren Folgendes aufweist:
eine Prüfwaage (300) zum Überwachen eines kombinierten Gewichtes der Verpackung und des Gemisches; und
eine Steuervorrichtung (50) zum Steuern der Additivabgabevorrichtung (20) als Reaktion auf eine Abgabe von der Prüfwaage (300) und von der Waage (1), um die Menge des Additivs, das durch die Additivabgabevorrichtung (20) zugeführt wird, so einzustellen, dass das kombinierte Gewicht der Verpackung und des Gemisches eine vorbestimmte Anforderung erfüllt.

15. Gerät gemäß Anspruch 14, des Weiteren mit:
einer Mischvorrichtung, die stromaufwärts von der Verpackungsmaschine angeordnet ist, um das Gemisch **dadurch** zu erzeugen, dass die abgegebenen Mengen der Gegenstände und des Additivs gemischt werden.

16. Gerät gemäß Anspruch 15, wobei
die Mischvorrichtung eine archimedische Schraube aufweist.

17. Gerät gemäß einem der Ansprüche 14 bis 16, wobei
die Waage eine Kombinationswaage ist.

18. Gerät gemäß einem der Ansprüche 14 bis 17, wobei
die Verpackungsmaschine eine vertikale Form-, Füll- und Verschließ-Verpackungsmaschine ist.

19. Gerät gemäß einem der Ansprüche 14 bis 18, wobei
die Abgabevorrichtung einen großen Trichter und einen Druckgastransport aufweist.

20. Verfahren zum Verpacken von Gegenständen, mit den folgenden Schritten:
Abgeben einer vorbestimmten Menge der Gegenstände;
Zuführen einer Menge eines Additivs zu der abgegebenen, vorbestimmten Menge der Gegenstände, um ein Gemisch zu erzeugen; und
Verpacken der abgegebenen Mengen der Gegenstände und des Additivs in einer Verpackung;
**gekennzeichnet durch**:
Überwachen des kombinierten Gewichtes der Verpackung und des Gemisches; und
Einstellen der Menge des zugeführten Additivs als Reaktion auf die Messung der Menge der Gegenstände und als Reaktion auf die Überwachung des kombinierten Gewichtes der Verpackung und des Gemisches derart, dass das kombinierte Gewicht der Verpackung und des Gemisches vorbestimmte Anforderungen erfüllt.

21. Verfahren gemäß Anspruch 20, wobei
das Gemisch **dadurch** erzeugt wird, dass die abgegebene, vorbestimmte Menge der Gegenstände mit der Menge des Additivs vor dem Verpacken gemischt wird.

22. Verfahren gemäß Anspruch 20 oder 21, wobei
die Gegenstände durch eine Kombinationswaage abgegeben werden.

23. Verfahren gemäß Ansprüchen 20 bis 22, wobei
die abgegebene, vorbestimmte Menge der Gegenstände und die Menge des Additivs unter Verwendung einer vertikalen Form-, Füll- und Verschließ-Verpackungsmaschine verpackt werden.

24. Verfahren gemäß einem der Ansprüche 20 bis 23, wobei
die Gegenstände Nahrungsmittel sind.

25. Verfahren gemäß Anspruch 24, wobei
die Nahrungsmittel Kartoffelchips sind.

26. Verfahren gemäß einem der Ansprüche 20 bis 25, wobei das Additiv ein Aroma ist.

## Revendications

1. Système de pesage et d'aromatisation pour produire des sachets contenant des produits aromatisés, ledit système de pesage et d'aromatisation comprenant :
- un dispositif de mesure (1) pour mesurer une quantité de produits, et
- un dispositif d'aromatisation (20) placé en aval du dispositif de mesure (1), en vue de délivrer une quantité d'arôme prédéterminée, aromatisant ainsi les produits,
**caractérisé par le fait que** le système comprend en outre
- un mesureur de vérification (300) placé en aval du dispositif d'aromatisation (20), en vue de mesurer une quantité de produits aromatisés,
- un moyen de réglage (50) pour régler au moins une valeur de seuil, sur la base de la quantité de produits mesurée par le dispositif de mesure, et
- une unité de tri (62) pour trier les produits aromatisés, sur la base de ladite valeur de seuil, au nombre d'au moins une, en fonction de la quantité de produits aromatisés mesurée par ledit mesureur de vérification (300).

2. Système de pesage et d'aromatisation selon la revendication 1, dans lequel ladite valeur de seuil, au nombre d'au moins une, inclut plusieurs valeurs limites inférieures et plusieurs valeurs limites supérieures.

3. Système de pesage et d'aromatisation selon la revendication 1 ou 2, dans lequel ladite valeur de seuil, au nombre d'au moins une, inclut une valeur limite inférieure minimale, qui indique qu'aucun arôme n'a été ajouté par le dispositif d'aromatisation.

4. Système de pesage et d'aromatisation selon l'une quelconque des revendications précédentes, comprenant en outre un moyen de contrôle pour contrôler la quantité d'arôme prédéterminée délivrée par le dispositif d'aromatisation, en fonction de la quantité de produits aromatisés mesurée par ledit mesureur de vérification et de la quantité de produits mesurée par ledit dispositif de mesure.

5. Système de pesage et d'aromatisation selon la revendication 4, dans lequel une quantité d'arôme effectivement ajoutée aux produits par ledit dispositif d'aromatisation est calculée à partir de la quantité de produits aromatisés mesurée par ledit mesureur de vérification et à partir de la quantité de produits mesurée par ledit dispositif de mesure, et
ledit moyen de contrôle effectue le contrôle de la quantité d'arôme prédéterminée délivrée par ledit dispositif d'aromatisation, sur la base de la quantité d'arôme effectivement ajoutée aux produits.

6. Système de pesage et d'aromatisation selon l'une quelconque des revendications précédentes, comprenant en outre
un dispositif d'emballage pour emballer les produits aromatisés dans un emballage, ledit dispositif d'emballage étant placé entre le dispositif d'aromatisation et le mesureur de vérification,
ledit mesureur de vérification mesurant la quantité de produits aromatisés, en tenant compte d'une quantité d'emballage dans lequel le dispositif d'emballage emballe les produits aromatisés.

7. Système de pesage et d'aromatisation selon l'une quelconque des revendications précédentes, dans lequel la quantité d'arôme prédéterminée, délivrée par le dispositif d'aromatisation, est calculée sur la base de la quantité de produits mesurée par le dispositif de mesure.

8. Système de pesage et d'aromatisation selon une des revendications 1 à 6, dans lequel la quantité d'arôme prédéterminée, délivrée par le dispositif d'aromatisation, est calculée en fonction d'un type d'arôme devant être délivré.

9. Système de pesage et d'aromatisation pour produire des sachets contenant des produits aromatisés, ledit système de pesage et d'aromatisation comprenant :
- un dispositif de mesure (1) pour mesurer une quantité de produits, et
- un dispositif d'aromatisation (20) placé en aval dudit dispositif de mesure (1), en vue de délivrer une quantité d'arôme prédéterminée, aromatisant ainsi les produits,
**caractérisé par le fait que** le système comprend en outre
- un mesureur de vérification (300) placé en aval du dispositif d'aromatisation (20), en vue de mesurer une quantité de produits aromatisés, et
- un moyen de contrôle (50) pour contrôler la quantité d'arôme prédéterminée délivrée par le dispositif d'aromatisation (20), sur la base de la quantité de produits aromatisés mesurée par ledit mesureur de vérification (300) et de la quantité de produits mesurée par ledit dispositif de mesure (1).

10. Système de pesage et d'aromatisation selon la revendication 9, dans lequel
une quantité d'arôme effectivement ajoutée aux produits par le dispositif d'aromatisation est calculée à partir de la quantité de produits aromatisés mesurée par ledit mesureur de vérification et à partir de la quantité de produits mesurée par ledit dispositif de mesure, et
ledit moyen de contrôle effectue le contrôle de la quantité d'arôme prédéterminée délivrée par ledit dispositif d'aromatisation, sur la base de la quantité d'arôme effectivement ajoutée aux produits.

11. Système de pesage et d'aromatisation selon la revendication 9 ou 10, comprenant en outre
un dispositif d'emballage pour emballer les produits aromatisés dans un emballage, ledit dispositif étant placé entre le dispositif d'aromatisation et le mesureur de vérification,
ledit mesureur de vérification mesurant la quantité de produits aromatisés, en tenant compte d'une quantité d'emballage dans lequel le dispositif d'emballage emballe les produits aromatisés.

12. Système de pesage et d'aromatisation selon une des revendications 9 à 11, dans lequel la quantité d'arôme prédéterminée, délivrée par le dispositif d'aromatisation, est calculée sur la base de la quantité de produits mesurée par le dispositif de mesure.

13. Système de pesage et d'aromatisation selon une des revendications 9 à 11, dans lequel la quantité d'arôme prédéterminée, délivrée par le dispositif d'aromatisation, est calculée en fonction d'un type d'arôme devant être délivré.

14. Dispositif pour emballer des produits, ledit dispositif étant adapté pour appliquer un additif aux produits et comprenant :
- un dispositif de pesage (1) pour distribuer une quantité de produits prédéterminée,
- un distributeur d'additif (20) pour délivrer une quantité de l'additif à la quantité prédéterminée distribuée de produits, aux fins de produire un mélange, et
- une machine d'emballage (200) à laquelle sont transférées les quantités distribuées de produits et d'additif, ladite machine d'emballage (200) emballant dans un emballage les quantités distribuées de produits et d'additif,
**caractérisé par le fait que** le dispositif comprend en outre
- un mesureur de vérification (300) pour surveiller un poids combiné de l'emballage et du mélange, et
- un moyen de contrôle (50) pour contrôler le distributeur d'additif (20), en réaction à un signal de sortie émanant dudit mesureur de vérification (300) et dudit dispositif de pesage (1), aux fins d'ajuster la quantité d'additif délivrée par ledit distributeur (20), de manière à ce que le poids combiné de l'emballage et du mélange corresponde à une valeur requise prédéterminée.

15. Dispositif selon la revendication 14, comprenant en outre un mélangeur disposé en aval de ladite machine d'emballage pour produire le mélange en mélangeant les quantités distribuées de produits et d'additif.

16. Dispositif selon la revendication 15, dans lequel ledit mélangeur comprend une vis d'Archimède.

17. Dispositif selon une des revendications 14 à 16, dans lequel ledit dispositif de pesage est un dispositif combinatoire.

18. Dispositif selon une des revendications 14 à 17, dans lequel ladite machine d'emballage est une machine verticale de formage-remplissage-fermeture.

19. Dispositif selon une des revendications 14 à 18, dans lequel ledit distributeur comprend une trémie pour produits en vrac et un moyen de transport à gaz comprimé.

20. Procédé d'emballage de produits, comprenant les étapes suivantes :
- distribution d'une quantité prédéterminée de produits;
- apport d'une quantité d'additif à la quantité prédéterminée distribuée de produits, aux fins de produire un mélange, et
- emballage des quantités distribuées de produits et d'additif dans un emballage,
**caractérisé par** la surveillance du poids combinatoire de l'emballage et du mélange, et
- ajustage de la quantité d'additif apportée, en réponse à la mesure de ladite quantité de produits et à ladite surveillance du poids combiné de l'emballage et du mélange, de manière à ce que le poids combiné de l'emballage et du mélange corresponde à des valeurs requises prédéterminées.

21. Procédé selon la revendication 20, selon lequel le mélange est réalisé en mélangeant la quantité prédéterminée distribuée de produits avec la quantité d'additif, avant d'effectuer ledit emballage.

22. Procédé selon la revendication 20 ou 21, selon lequel les produits sont distribués par un dispositif de pesage combinatoire.

23. Procédé selon les revendications 20 à 22, selon lequel la quantité prédéterminée distribuée de produits et la quantité d'additif sont emballées en utilisant une machine d'emballage verticale de formage-remplissage-fermeture.

24. Procédé selon une des revendications 20 à 23, selon lequel les produits sont des produits alimentaires.

25. Procédé selon la revendication 24, selon lequel les produits alimentaires sont des chips.

26. Procédé selon une des revendications 20 à 25, selon lequel l'additif est un arôme.
